(19) Europäisches Patentamt

European Patent Office

Office européen des brevets

(11) **EP 1 359 406 A1**

(12) **EUROPEAN PATENT APPLICATION**

(43) Date of publication:
**05.11.2003 Bulletin 2003/45**

(51) Int Cl.⁷: **G01N 21/53**, G01N 21/85,
G01N 15/02, G01N 15/14

(21) Application number: **02447072.6**

(22) Date of filing: **25.04.2002**

(84) Designated Contracting States:
**AT BE CH CY DE DK ES FI FR GB GR IE IT LI LU
MC NL PT SE TR**
Designated Extension States:
**AL LT LV MK RO SI**

(71) Applicants:
- **Michiels, Luc
  9200 Dendermonde (BE)**
- **Lybaert, Stefaan
  9940 Evergem (BE)**
- **Neuville, José
  8970 Poperinge (BE)**

(72) Inventors:
- **Michiels, Luc
  9200 Dendermonde (BE)**
- **Lybaert, Stefaan
  9940 Evergem (BE)**
- **Jaeken, Peter
  3001 Heverlee (BE)**
- **Krapf, Klaus-Georg
  97292 Uettingen (DE)**

(74) Representative:
**Brants, Johan Philippe Emile et al
De Clercq, Brants & Partners cv
Edgard Gevaertdreef 10a
9830 Sint-Martens-Latem (BE)**

(54) **Method and device for efficient spraying and sensors therefor**

(57)     The present invention relates to a method for identifying the size, shape and material properties a sprayed gaseous, liquid or solid medium using scattered radiation measurement, comprising:

aiming at least two separate radiation sources simultaneously at a common volume of medium to be measured;
operating at least two detectors simultaneous with the radiation sources, said detectors detecting scattered radiation from said radiation sources;
positioning the radiation sources and the detectors in an alternated fashion; and
correlating and evaluating said detected scattered radiation using signals from the detectors to identify the size, shape and material properties of the medium.

The invention further relates to a device for identifying the size, shape and material properties a sprayed gaseous, liquid or solid medium using scattered radiation measurement, comprising:

scattered radiation measurement means, and
a supporting frame able to support the scattered radiation measurement means,

wherein said radiation measurement means consist of radiation sources and corresponding detectors being provided on the frame in a alternated fashion;
and means for correlating and evaluating said detected scattered radiation using signals from the detectors to identify the size, shape and material properties of the medium.

**EP 1 359 406 A1**

FIG. 1

**Description**

**Field of the Invention**

The invention relates to a method for identifying flow parameters of a sprayed gaseous, liquid or solid medium or of a mixture of one or more thereof, such as a sprayed herbicidal or insecticidal solution by measuring scattered radiation. The method of the invention relies on the accurate characterisation of physical dual phase systems, i.e. the gaseous phase and the liquid phase, in particular in agricultural or industrial application field. In a further aspect, the invention is directed to specific sensors suitable in the method of the invention.

**Background Art**

The spraying of chemicals on plants for nutritional, disease and pest control purposes is a vital factor in maintaining the high level of productivity which has come to characterize the agricultural art. In agricultural and horticultural spraying techniques, droplets of water and chemicals are the key issues for the protection of the crops against diseases, pests and weeds. For some chemicals, the required amount of active ingredient a hectare may be as low as 2 grams. Therefore it is even more important that the mixture of water and chemicals is evenly distributed over the aimed targets. In average the volume of mixture applied per hectare varies between 100 l (North) and 1.500 l (South) in Europe and mean droplet size of application varies between 180 and 300$\mu$m.

Research and many field experiments during the past have proven that for treating weeds a number of about 30 droplets/cm$^2$ is necessary to obtain a good biological efficacy of the sprayed agents. For insects a number of 50 droplets/cm$^2$ is found to be active but fungicides need up to 70 droplets/cm$^2$. To guarantee this number of droplets and corresponding coverage, fine sprays with an equal distribution over the treated surface is needed.

An unequal distribution of the spray mixture results in an over-dosage or under-dosage. Under-application leads to an incomplete protection of the crops. Over-application on the other hand may lead to damage at the cultivated crop or to an excess residue of chemicals in the crops at harvest time. Herewith comes concern about pollution of our environment, particularly our water supply. There are thus environmental as well as an economic incentives for optimizing the chemical spraying process so that the greatest agricultural benefit is achieved with the least damage to the environment.

To protect the environment and the public health, to keep agriculture economically sound in all regions, optimization of the spraying process continues as new technology becomes available. All tools to help the applicators of chemicals/pesticides to distribute their mixture more evenly and at the aimed quantity and quality of droplets, are highly looked for by industry and consumer related organisations. This is aptly illustrated by the evolution of mobile agricultural sprayers used for spraying trees in groves and orchards.

The development of the air-blast sprayer as disclosed in the U.S. Pat. No. 2,475,449 issued to G. W. Daugherty on Jul. 5, 1949, "Spraying Machine," improved sprayer effectiveness by removing the operator from the spray zone, approximately doubling the acreage sprayed per day and providing a more thorough spray coverage of foliage. The air-blast sprayer used large volumes of high speed air at approximately 100 miles per hour (mph) to propel the droplets ejected from pressurized nozzles. Swirl plates beneath the nozzle orifices were used to enhance the backup of droplets as they entered the air stream. The spray vehicle moved at approximately 0.5 mph to 1.5 mph between rows of trees, spraying the trees on either side at a typical spray material application rate of approximately 500 to 5000 gallons of chemical/water mix per acre. The air-blast sprayers were not turned off between trees or at gaps where trees were missing or where short replants were located.

The use of concentrated solutions in sprayers requires uniform spray distribution and accurate spray metering to avoid the chemical waste and possible vegetation damage occurring from chemical over-concentrations and to avoid the ineffectiveness of the spray function resulting from under-concentrations. U.S. Pat. No. 3,489,351 issued to J. M. Patterson on Jan. 13, 1970, "High Concentrate Sprayer," discloses modifications to the air-blast sprayer design to provide accurate spray metering and uniform spray distribution. Two blowers in a vertical stack are employed having axial inlets and radial outlets ducted together to blend the flows into a uniform speed air blast from the top to the bottom of the tree being sprayed. This accurate spray metering method is not applicable to non-spherical particles.

Loss of agro-chemicals to the environment is less and less accepted by the general public and by the rural population living close to agricultural production areas. Reducing these losses is strongly related to socio-economic behaviour of the farmers and to the distribution system used to apply these agro-chemicals. Especially those systems used in plantation crops generate a spray plume that is particularly difficult to control and to optimise. The spray plume is an air-droplet mixture. For non-air assisted sprayers droplets are generated in nozzles that emit the droplets in the air. In the case of air assisted sprayers a fan produces a propelled air stream in which through the nozzles droplets are injected.

The need for optimizing the spray process in order to reduce spray drift and off target losses of agricultural chemicals is obvious. Not only is the effective concentration range for crop growth a crucial factor but also an important economical factor. Often an over-measure or excess of these agro-chemicals is applied to the crops resulting in a non-optimal use and an environmental drawback.

Several attempts were made to develop a reliable measuring tool that reflects the liquid distribution profile generated by air assisted sprayers. Most of these devices are basically mechanical or chemical phase separators in combination with a read out unit. These mechanical devices have a distorting influence on what they are measuring. As a consequence the generated measurements are unreliable and not often used to optimize the spray process.

A review of those systems is given by Vieri *et al.* (1998), hereby incorporated by reference. Said document describes for example the possibility to use laser detectors as an alternative.

Radiation scattering methods are fairly common to characterize particles of varying sizes. Radiation or light scattering methods are widely used when the particles are not readily accessible. They are also attractive for determining the size of particles suspended in gas as e.g. aerosol sprays. These devices however have several drawback such as their calibration.

It is therefore an object of the present invention to provide a method for identifying physical parameters in a gaseous, liquid carrier medium using scattered radiation that overcomes the drawbacks of the prior art.

It is another object of the present invention to provide a method for an accurate and reliable identification of very small particle sizes, and parameters such as volume, rate, etc.

It is a further object of the invention to provide a method that determines the geometric shape of the detected particles within the media.

It is a further object of the present invention to provide a measuring means comprising a sensor and frame that allows farmers, technicians and inspectors to check objectively and correct settings of sprayers.

## Summary of the Invention

The present invention relates to a method for identifying the size, shape, and material properties of a sprayed gaseous, liquid, or solid medium using scattered radiation measurement, comprising:

aiming at least two separate radiation sources simultaneously at a common volume of medium to be measured;
operating at least two detectors simultaneous with the radiation sources, said detectors detecting scattered radiation from said radiation sources;
positioning the radiation sources and the detectors in an alternated fashion; and
correlating and evaluating said detected scattered radiation using signals from the detectors to identify the size, shape and material properties of the medium.

An accurate measurement is available due to the balancing and compensating effect of the alternating positioning of the radiation sources and detectors. Furthermore a specific position detection is made possible.

The present invention discloses further a device and scattered radiation measurement means for application of the above method according to the invention.

The present invention provides for a measurement method and means for the reliable and accurate measurement of particle distribution in a sprayed medium.

An important advantage of the method according to the invention over the state of the art is that it can identify very small particles and can determine the geometric shape of the detected particles and their position.

## Detailed Description

The present invention provides a method for non-contact measurement of particle distribution in a sprayed medium, said medium comprising dual phase systems. Particular useful examples of dual phase systems comprise gas-droplet and gas-particle media. The gas fraction is usually air. The droplet fraction may be an exogenous chemical co-formulated in an aqueous solution or an organic solvent. As used herein, an exogenous chemical refers to a chemical substance, whether naturally or synthetically derived, which (a) has biological activity or is capable of releasing in a plant an ion, moiety or derivative which has biological activity, and (b) is applied to a plant with the intent or result that the chemical substance or its biologically active ion, moiety or derivative enter living cells or tissues of the plant and elicit a stimulatory, inhibitory, regulatory, therapeutic, toxic or lethal response in the plant itself or in a pathogen, parasite or feeding organism present in or on the plant. Examples of exogenous chemical substances include, but are not limited to, chemical pesticides (such as herbicides, algicides, fungicides, bactericides, viricides, insecticides, aphicides, miticides, nematicides, molluscicides, and the like), plant growth regulators, fertilizers and nutrients, gametocides, defoliants, desiccants, mixtures thereof, and the like. Also various combinations of exogenous chemicals and surfactants or other adjuvants are suitable examples.

In particular, the present invention provides a method for low cost, stable, reliable and accurate optical measurement of various physical parameters in a spray, without interfering with its composition or physical behaviour such as, by way of non-limiting examples, the average speed of the particles, the average size of the particles, the optical density of the particles, the number of particles. The flow rate can mathematically be derived from the aforementioned parameters. By means of numerical techniques measurement data are transformed in a way that allow the determination of the droplet speed with some accuracy. The robustness of the measurements is validated for different conditions; the measurements, within the tested limits, are not significantly influenced by the chemical properties of particles, the temperature of the particles, ambient radiation or light conditions, and ambient temperature.

In the present specification, a method is provided, aiming at least one array of alternated radiation sources and detectors.

In one embodiment according to the present invention, a method is provided, wherein each radiation from only one radiation source is evaluated with respect to each detector.

As used herein, the term radiation source refers to optical or electromagnetic radiation source including but not limited to thermal sources such as tungsten radiation source, and luminescent sources such as metal halide, fluorescent, and laser illumination, and LED diodes.

In general, when a beam of radiation strikes or is interfered by an assembly of particles, some of it is transmitted, some absorbed and some scattered. The scattered radiation includes diffracted, refracted and reflected parts of the original beam and the absorbed radiation is retransmitted at a longer wavelength and this is usually not picked up by detecting devices.

According to the present specification, the detectors are evaluated selectively according to frequency with the use of modulated radiation. In addition to the scattered radiation, the extinction of a radiated beam may also be measured.

A further embodiment of the present invention provides a method operating with at least two straight-lined arrays of alternated radiation sources and detectors.

In this specification, the wording two radiation sources and two detectors, positioned in an alternating fashion may be cognate expressed as an array of alternated radiation sources and detectors. As used herein, the expression straight-lined array, refers to two radiation source-detector pairs of which each radiation source and corresponding detector are oppositely positioned in a straight line and facing each other; said two pairs in a parallel position to each other wherein radiation sources and detectors are alternating positioned.

The present invention provides a method wherein the emitted radiation has a wavelength ranging from 750nm to 1050nm. In a particular embodiment, a method is provided, wherein the emitted radiation has a wavelength from 750-900nm, preferably around 850nm.

A method of identifying particles contained in a gaseous or liquid medium according to the invention may be accomplished with different devices through the application of scattered radiation measurement. Irrespective of the concrete construction, relatively little space is required by the devices. Therefore, the method can be applied under different environmental conditions using particle measuring equipment that has dimensions and handling properties that permit mobile application of the devices.

According to one aspect of the present invention, a device is provided for identifying the size, shape and material properties of a sprayed gaseous, liquid or solid medium using scattered radiation measurement, comprising:

scattered radiation measurement means, and
a supporting frame able to support the scattered radiation measurement means, wherein said radiation measurement means consist of radiation sources and corresponding detectors being provided on the frame in a alternated fashion; and
means for correlating and evaluating said detected scattered radiation using signals from the detectors to identify the size, shape and material properties of the medium.

A device according to the present invention, for identifying the size, shape and material properties of a sprayed gaseous, liquid or solid medium comprises a scattered radiation measurement means. Said scattered radiation measurement means may comprise one or multiple arrays of radiation sources and detectors attached to a supporting frame. Corresponding radiation sources and detectors are attached at opposite supporting frame members and facing each other. In an array, two radiation sources and two detectors are alternating positioned. The alternating positioning of the radiation sources and the detectors within a straight-lined array allows the determination of eccentricity of particle cloud in the measuring area based on a potentiometric effect. For a homogenous sprayed medium, due to the divergence of the radiated beam (although small), a particular particle in said medium has the highest influence on that detector of which it is most distant or on that radiation source to which it is closest. This effect is linear such that the mean of the particles in the sprayed medium can be determined.

Usually, corresponding radiation sources and detectors are aligned in one plane or measurement area. In a particular embodiment, corresponding radiation sources and detectors are aligned within an array in one plane or measurement area. In a further embodiment, two arrays of alternated radiation sources and corresponding detectors are parallel aligned in one plane or measurement area. In yet a further, embodiment, two pair arrays of alternated radiation sources and corresponding detectors are parallel aligned in one plane or measurement area. Also useful are multiple arrays of alternated radiation sources and corresponding detectors being parallel aligned in one plane or measurement area. Also, alignments of sensor pairs within one or more arrays, attached to a single frame with different pairs aligned in different planes are useful. Such multiple plane alignments may be accommodated by a basic 2-D frame describing local 3-D areas. Typically, said frame is of non-corrosive metal, preferably of non-corrosive aluminum.

According to an embodiment, a device is provided comprising a frame, wherein said frame consists of one and preferably two pair of parallel aligned supporting legs delimiting a measurement area.

The present invention provides an accurate and reliable measurement means for identifying physical parameters of particles in a sprayed medium. Ultimately, said measurement means serves the adjustment and optimization of a spray system. Ultimately, said measurement means serves an on-line control of spray distribution and quality and adjustment for crop parameters over the field, including growing stage and crop architecture. A device according to the present invention receives information pertaining to the boundaries of spray zones and spray conditions. A device according to the present invention controls many factors pertaining to a measured sprayed medium including but not restricted to application rate, flow rate, spray pressure, droplet size and droplet size spectrum of the sprayed medium, droplet volume which may depend on controllable and uncontrollable factors including but not restricted to wind velocity and direction, travel speed of the spraying vehicle and direction with respect to the wind direction, position of the spray vehicle, spray nozzle height, spray nozzle tip configuration.

A device according to the present invention identifies physical parameters of particles in an air-assisted as well as a non-air assisted sprayed medium. Measurements may be performed in an experimental set-up for adjustment of the spray system prior to application of the spray. A particularly useful set-up comprises a device according to the present invention attached to a vehicle-mounted spraying equipment, said device attachment being permanently or temporarily as to remove and replace. A spray vehicle may comprise ground vehicles, including living such as human and animal and non-living mechanical vehicles, aircraft's, and water vessels.

Accordingly, it is a further aspect of the present invention to provide an agricultural spraying system comprising a device according to the present specification.

In a further aspect of the present invention, a radiation measurement means is provided comprising radiation sources and detectors, mounted on a print, in a mechanically positional set up. Said radiation sources and detectors have specific characteristics in order to obtain a radiated beam with a minimal divergence.

According to the present invention, a radiation measurement means is provided comprising light-emitting diodes (LED). Also injection laser diodes (ILD) may be useful.

Said radiation measurement means may comprise a LED CLE333E radiation source, said radiation source with suitable wavelength and comprising a point source and a high power (2.5 W/cm$^2$). At the radiation source end, said point source is placed in the focus point. Furthermore, the radiation source may consist of a very stable voltage supply (especially in the high frequency range) which provides a continuous current to the diode. A good stability of the power supply is required because a variation of the radiation source current may lead to a variation of the acknowledgement signal. This is undesirable because a very fast reception at the detector end is desired.

A radiation measurement means according to the present invention may comprise positive-intrinsic-negative diodes or PIN photodiode detectors. Non-limiting examples of suitable PIN photodiodes include Si-PIN, GaAs-PIN, and InGaAs-PIN photodiodes. Particularly useful in the present invention is a Si-PIN photodiode. Further particularly useful in the present invention is a BPW 34 photodiode.

As appreciated by a person skilled in the art, the package represents an important part of any photodiode product. Non-limiting examples of photodiode packaging, useful in the present invention, include TO-housing, metal housing, ceramic packages, ceramic substrates, LCC, fiber optic packages, and plastic packages.

Particularly useful according to the present invention, is a detector with a high sensitivity for the suitable wavelength emitted by the radiation source. Said high sensitivity may be required for atomized liquid drops having a small surface cover. The detector also may have a high response velocity, and a large surface to obtain a maximal acknowledgement signal. At the detector end, the detector is preferably placed at a distance of about 8 mm in front of the focus point, as such the received energy may be maximally distributed on the receiver surface. For the measurement of said distance, a margin of 20% is usually taken in forward sense, as such a possible tolerance on the construction has minimal consequences. The detector, like the radiation source, preferably comprises a very stable voltage supply which needs to be kept very stable at the first receiver stage through the use of a suitable operational amplifier. Non-limiting examples of operational amplifiers comprise high speed (> 50MHz); low power; micro power; low voltage; general purpose; rail-to-rail input; low noise; precision, and high output power (> 100mA) operational. Particular useful in the present specification is the use of a rail-to-rail input operational amplifier. More in particular in the present specification is the use of a LMC6492 operational amplifier.

The radiation measurement means according to the present invention is optimized with a typical response maximum from 750nm to 1050nm. More suitable radiation measurement means according to the present invention are optimized with typical response maximum from 750nm to 950nm. Particular useful are radiation measurement means according to the present invention, optimized with diodes emitting 850nm and corresponding photodiodes highly sensitive for 850nm.

According to the present invention, a radiation measurement means is provided wherein the radiation sources and detectors comprises cylindrical focussing lenses. In a particular embodiment of the present invention, a radiation measurement means is provided, wherein plano-convex lenses are provided in the radiation source as well as in the detector. A plano-convex focussing lens on the radiation source side bundles the emitted beam.

A second plano-convex focussing lens on the detector side focus the portion of radiation or light reaching the detector. Non-limiting examples of suitable lens shapes include rectangular, circular, and square lenses. Particularly suitable according to the present specification, are detector and radiation sources provided with circular lenses. Said lenses may be of glass such as borosilicate crown glass, quartz or exotic, including coated and non-coated designs. Said lenses have a general diameter ranging from 1.27cm to 3.71cm, the preferred size depending on the diameter of the optical diffuser wherein the lens is positioned and fixed. Preferably, a radiation measurement means according to the present invention comprises radiation sources and detectors with plano-convex lenses of diameter 2.54cm and focus 50mm.

Accordingly, a radiation source according to the present invention emitting a light beam of 20mm diameter gives, after 3.6m, a spot of 55mm diameter. Thus the divergence is 0.28°. In practice, very good results are obtained with intermediate distances up to 4m. Because of the divergence for larger distances, the power of the radiation source should be increased, along with the sensitivity of the detector.

The radiation sources and detectors of a radiation measurement means according to the present invention are assembled within optical diffusers. Said optical diffusers are provided in order to eliminate the influence of external radiation sources. Said optical diffusers are equipped with an optical labyrinth, comprising an arrangement of left and right oriented very rough internal screw thread. This screw thread absorbs in the labyrinth every incident radiated beam, which enters at an angle of 10° or more. As such, the influence of external radiation incidence is maximally abolished. Typically, a light overpressure is applied in the optical diffusers to avoid condensation on the lens and on the internal edges of the optical diffuser. The optical diffusers are housed in a basic module.

Accordingly, in yet another embodiment of the present invention, a scattered radiation measurement means is provided comprising:

> a LED light source and a corresponding photodiode comprised in a housing, said housing is provided with optical labyrinths consisting essentially of a threaded cylindrical tubular parts provided in the pathway of the emitted radiation.

In a further embodiment, a scattered radiation measurement means is provided, wherein an overpressure is maintained in the threaded cylindrical tubular part provided in the pathway of the emitted radiation.

Said housing or basic module of the system consists of a metal mono-bloc. Preferably, said mono-bloc is of corrosion resistant aluminium.

Typically, a pair of housings is oppositely and facing attached to a supporting frame and fits up to two straight-lined arrays of radiation sources and corresponding detectors.

Also, multiple housings may be pair-wise attached on a frame. In general, ten housing modules (5 pairs) may be required per meter scanning length. The sensing length of each housing pair is 20cm, with a typical resolution of the measurements each 5cm.

According to the present specification a device is provided comprising a frame, sufficiently robust to prevents distortion and hence misalignment of the arrays of alternated radiation sources and detectors. The frame supporting members may contain assembling grooves to attach on the housing modules, leaving one dimension for alignment.

The position of the frame is preferentially perpendicular to the expected direction of the spray cloud movement. The position as such, horizontal, vertical or angled is not important.

A frame according to this specification may have various shapes and sizes, including shapes delineating 2-D planes, 3-D areas or 3D-areas within a 2-D plane. The preferred shape and size depends on the application and the parameter to be measured. By way of example, a typical frame for use as a test frame for testing air assisted orchard sprayers may be 2m wide and 4.5m high, delineating one plane. For particle speed measurements, typically two frames positioned perpendicular to each other of which one perpendicular to the spray direction are secured to each other.

Depending on the required spatial resolution of particle speed measurements and depending on the speed to be measured, the number of arrays and distance between the arrays or between pairs of radiation sources and corresponding detectors and number of multiple nozzle positions may be selected. Two identical frames may be positioned behind each other perpendicular to the near forward particle direction and with a particle speed dependent spacing.

In practice, a light emitting diode sends a beam towards a forward oriented matched detector photodiode within the visible to infrared range of electromagnetic waves. A beam that exits the radiation source, in a measuring device according to the present invention, with a diameter of 2.5cm reaches the opposite side with a diameter of 5.0cm.

After the first receiver stage, the signal is split in 2 signal types: a mean delayed signal (with low transmitting network resistor R8 and capacitance C8) and a rapid signal that is emitted in a differential form. The rapid signal is used to monitor the stability of the signal and to determine the velocity. The mean signal is a linear analogous signal which is reciprocally proportional to the loss of radiation intensity which is caused by the particles which are between the radiation source and detector. This signal, however, is not a value for the flow rate; it is a value which is proportional to the density formed by the size and number of the particles and not proportional to the flow rate. This signal becomes a value for the flow rate at a later stage via software processing in PC, through application of the appropriate formulas.

Signals, descending from the arrays of alternated radiation sources and corresponding detectors are converted in an analogue-to-digital (A/D) converter into a digital output signal. A micro-processor drives all A/D converters, gathers the information of all optical diffusers, and offers these to an external PC. The A/D converters measure all signals with the same reference. Hereto, a common multiplex and a common reference is used. The read-out velocity of the measured value needs to be high in order to detect sudden changes. The influence of the external radiation or light and drift is neutralized through the built-in of an offset in the soft-ware of the micro-processor. The offset is adjusted with every measurement.

A printed circuit board fitting onto the backside of the housing contains two identical units to power the emitting diodes according to the required specifications of the diodes. The signal of the photocells is amplified and transferred to the control box as an analogue tension (V-range between 4.3 and 0). Each housing is connected to a central control box, pairing the data. The intensity of a radiated beam may be adjusted. The printed circuit board in the control box transfers all information into a digital signal and has a RS232 output for PC connection and communication.

The arrays of alternated radiation sources and detectors give attenuation results. It is very similar to turbidity and optical density measurements based on the Law of Lambert-Beer. The operational conditions do not fall within the required border conditions under which the aforementioned law can be applied. Therefore a semi-empirical formula was developed relating attenuation (optical density measured by the sensor system), average droplet size (measured by the system), average droplet speed (measured by the system) and translating it to volumetric particle content. Through positioning of at least one pair of arrays of alternated radiation sources and detectors at right angles to the original measuring surface, it is possible to measure the velocity of a particle or in extension a spray. If only particle speed is relevant, one wavelength may be used. Two different emitting wavelengths may be used to determine the average particle size using attenuation ratios.

A cross-correlation function of the formula hereunder was identified used to determine fluid velocity.

$$K_{xy}(p) = \lim_{T \to \infty} \frac{1}{T} \int\limits_{-T/2}^{T/2} x(t)\,y(t-p)\,dt$$

Said formula reveals that measurements of the particle cloud at two different positions x and y is required. The time delay to travel from y to x (or vice-versa) is denoted by (t-p) in the above formula. The cross-correlation function comes into play in case of signal variation in time for both measurements at position x(t) and y(t-p).

Objects and features of the present invention will become apparent from the following detailed description of the accompanying drawings. It is to be understood, however, that the drawings are designed as an illustration only and not as a definition of the limits of the invention.

In the drawings, wherein similar reference characters denote similar elements throughout the several views:

Figure 1 illustrates an embodiment for application of the method according to the invention, attached to tractor-mounted spraying equipment.

Figure 2 shows a schematic structure of an embodiment for application of the method according to the invention; wherein

Figure 2A shows a front view of said device, and

Figure 2B shows a cross-sectional view of said device taken along the line A-A of Figure 2A.

Figure 3 illustrates an embodiment of a housing for radiation measurement means of a device for application of the method according to the invention; wherein

Figure 3A illustrates the front view of said housing, and

Figure 3B illustrates the rear view of said housing, and

Figure 3C illustrates a cross-sectional view of said housing along line A-A of Figure 3A, and

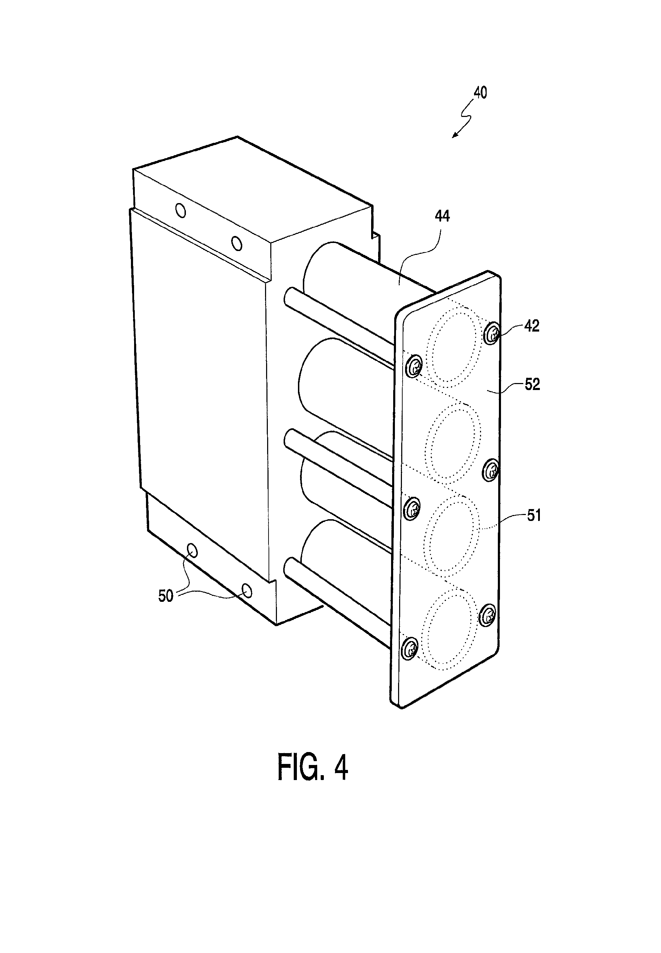

Figure 4 shows a perspective view of a housing for radiation measurement means according to the present invention, and
Figure 5.1 shows a graph wherein the calculated (sensor) versus measured (patternator) discharge for hollow cone nozzles is shown.
Figure 5.2 shows a graph wherein the calculated (sensor) versus measured (patternator) discharge for flat fan nozzles is shown.
Figure 5.3 shows a graph wherein calculated (sensor) versus measured (patternator) discharge for all sampling points is shown.

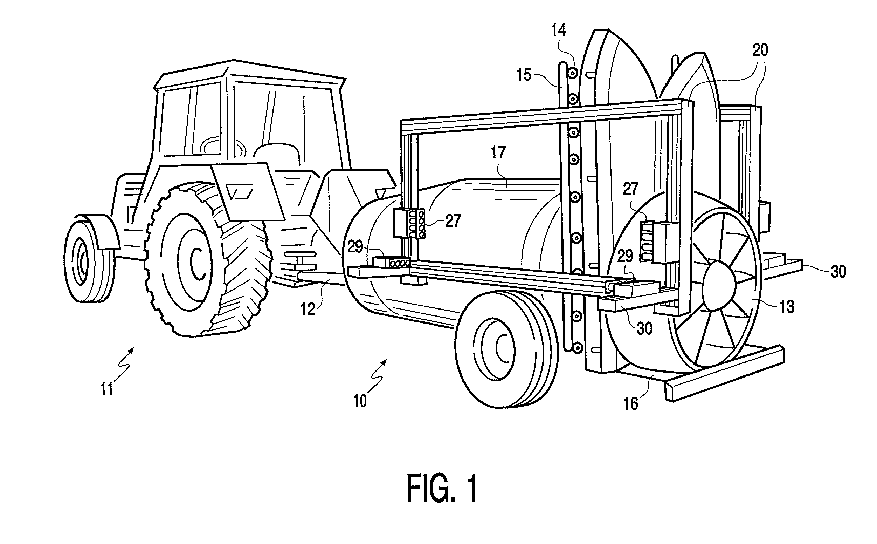

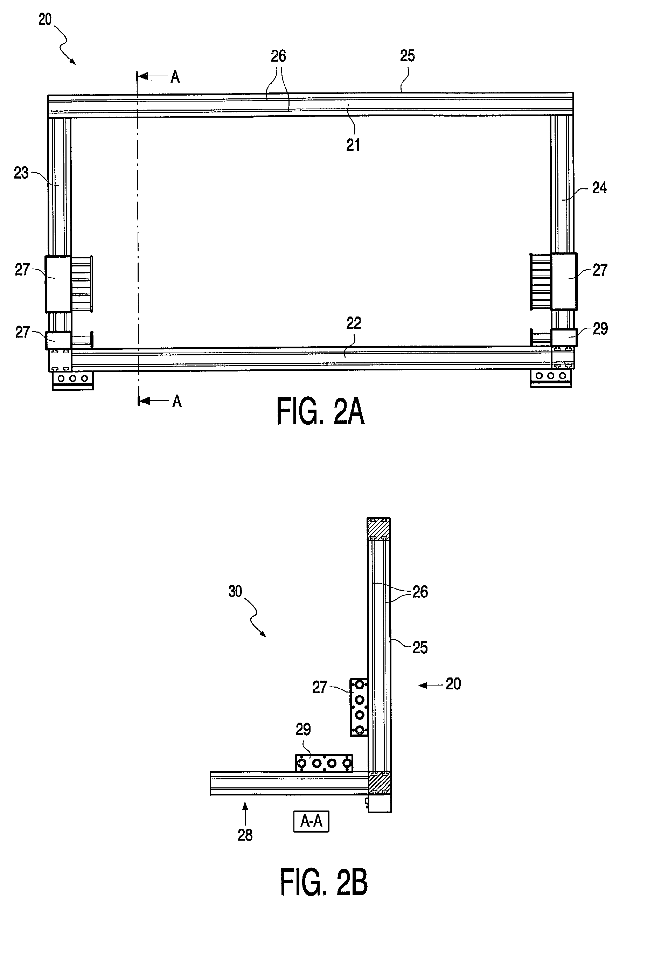

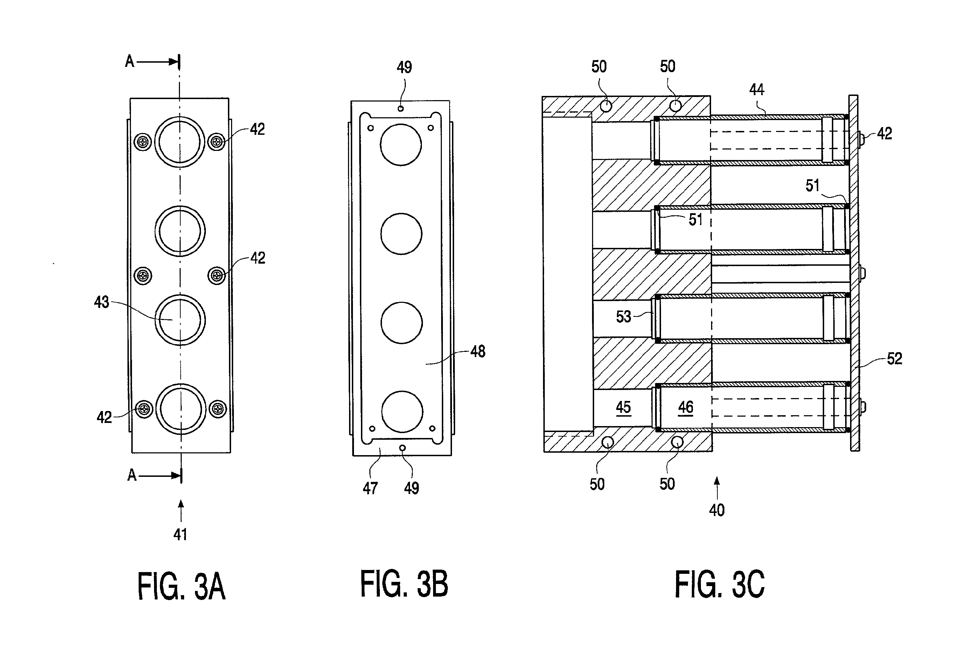

An illustrated embodiment of Figure 1 shows a spraying apparatus 10 attached to a power-driven tractor 11 behind the driver's seat. The spraying apparatus 10 comprises a support structure 12 for attachment to the tractor 11. A fan 13 produces a propelled air stream to a pair of nozzle assemblies 14 aligned along vertical members 15 flanking and perpendicular positioned with regard to the longitudinal axis of the tank. A support member 16 supports the fan. A two-frame set-up device 30 according to the present invention is attached at each side of a tank 17 parallel with the tank's longitudinal axis. Both devices 30 for identifying the size, shape, and material properties of a sprayed gaseous, liquid or solid medium according to the present invention are balanced and in equal flanking opposite position and facing away relative to the tank 17. A sprayed medium flowing from the nozzle assembly 14 through the first frames 20 is measured by arrays 27 and 29 of radiation sources and detectors and detected signals allow for instant and continuous adjustment and optimization of the spray system.
As shown by the illustrated embodiment of Figure 2A, a first frame 20 comprises two horizontal, parallel aligned support members 21 and 22, and perpendicularly thereon two vertical, parallel aligned support members 23 and 24 are provided. Horizontal and vertical support members are two by two secured along their extremities to delineate a square frame. Each support member is delimited by four lengthwise edges 25 and four sides, each side delimited by two adjacent edges, forming a hollow square longitudinal tube. Lengthwise along each side of said square tube, a pair of parallel grooves 26, runs in the center between two edges. Said grooves serve the attachment to frame 20 of one pair or more of first-frame sensor housings 27, attached to opposite support members and facing each other. For particle speed measurements, at least one second frame 28 is positioned perpendicular to first frame 20 (Figure 2B). First and second frames 20 and 28 secured perpendicular to each other 30 along one of their horizontal support members delineate an XYZ-area. Said second frame 28 may be identical to the first frame 20. A pair of second-frame sensor housings 29 is attached to opposite support members of said second frame 28, said pair of second-frame sensor housings 29 parallel positioned to the pair of first-frame sensor housings 27.
A spray flux would pass from right to left through the first frame 20 and with the second frame positioned horizontally underneath said spray flux (Figure 2B). As such, the housings 27 positioned vertically or perpendicular to the spray direction are measuring the optical density of the spray cloud. The horizontally positioned housings 29 or the housings positioned along the spray direction are used to calculate the particle speed.
As shown in Figure 3, the housing aspect of the arrays of alternated radiation sources and detectors will be further described. The front side 41 of the housing 40 (Figure 3A) contains six small threaded holes 42 for screws to keep the assembly together. Four larger circular holes 43 are milled to contain optical diffusers 44. The milled holes comprise a lower part 45 and an upper part 46, said lower part having a smaller diameter compared to the upper part (Figure 3C). The backside 47 of the housing 40 (Figure 3B) has a rectangular milled carving 48 where a printed circuit board fit in. Two threaded holes 49 are milled at the extremities of the backside 47 in order to attach a sealed back cover plate. The sides of the housing contain four holes 50 for attaching the module to a frame 20 or 28 according to the present invention. The basis of the housing 40 is 200mm by 57mm. The height of the housing 40 is 98mm.
Up to four optical diffusers 44 (outer diameter 300mm with a passing, length 114.8mm, inner diameter 25.4mm) may be positioned in the housing 40 (Figure 3C).
The inner part of an optical diffuser 44 is roughly threaded. Such threaded cylindrical tubular part 44 prevents ambient radiation sources to disturb the measurements. Silicone o-rings 51 at both sides of an optical diffuser 44 seals the extremities of the optical diffuser 44. The optical diffusers are sandwiched between the housing 40 and a plastic cover 52 by means of six screws. The plastic cover 52 used is transparent for the emitted wavelengths.
The end position of the part of the optical diffuser 44 entering the housing 40 is marked by a circular notch 53 in the housing 40. A second notch immediately below the first one (not shown) supports and positions a plano-convex focussing lens (not shown). The O-ring 51 of the optical diffuser 44 sandwiches the lens between the notch and the optical diffuser 44, ensuring its position and preventing any damage of the lens by the metal edge of the optical diffuser 44. The lower part 45 of the milled circular holes 43 in the housing 40 has an internal diameter of 23.8mm. It serves as a center for a photocell or diode. The photocell or diode itself is embedded in a plastic cylinder that fits in the lower part of the circular milling. The electrical wiring entering/exiting the plastic cylinder from the bottom part is connected to the printed circuit board at the back of the housing 47. The housing construction is set up to achieve an easy assembling and alignment of all parts.

**Examples**

The following examples of the invention are exemplary and should not be taken as in any way limiting.

**Example 1: Spray table measurements vs sensor unit measurements** *Spray table as control standard method*

The data generated with sensor units according to the present invention is compared with data generated by a standard method. Said standard method gives the distribution of the flow rate of sprayed liquid. The liquid sprayed by the nozzle is collected by a so-called spray table comprising several grooves. The width and length of these grooves are respectively 2.5cm and 200cm. The bottom of the grooves has an inclination so that the liquid flows to one side. The liquid per groove is collected into graduated cylindrical collection tubes. The maximum volume of each cylindrical tube is 100ml.

*Sensor prototype - sensor unit set-up*

The sensor prototype consists of 12 sensor pairs (6 arrays of radiation sources and detectors) existing of 12 radiation sources and 12 detectors mounted on a frame of 1 m by 2 m. In this prototype, the outer diameter of the cylindrical tubular part of a radiation source and a detector are respectively 3.18cm and 3.00cm. The inner diameter of the cylindrical tubular part of a radiation source and a detector are respectively 2.90cm and 2.40cm.
As compared with the spray table, the width of one groove and the diameter of one radiation source are identical for these prototype sensors. The radiation sources and detectors are mounted directly across each other and the distance between them is 160.5cm. The radiation sources are alternated. The distance between the center of a cylindrical tubular part of a radiation source and a cylindrical tubular part of a detector is each time 3.8cm. The sensor prototype is placed in front of the spray table. The relative positions of the grooves and radiation sources are given in Table 1. These positions reflect respectively the centers of the grooves and the centers of the cylindrical tubular part of the radiation sources. Position 0cm is the edge of the first groove and the center of the first radiation source is positioned at 2cm. The distance between the outside of radiation source 1 and 11 is 45cm and this corresponds to 18 grooves and cylindrical collection tubes. The radiated beam of the radiation source and the grooves are directed parallel with each other.

Table 1.

| The position of the centers of the cylindrical tubular parts of the radiation sources and the middle of the grooves. | | |
| --- | --- | --- |
| **Position (cm)** | **Groove serial number** | **Transmitter serial number** |
| 1.3 | 1 | |
| 2.0 | | 1 |
| 3.8 | 2 | |
| 5.8 | | 2 |
| 6.3 | 3 | |
| 8.8 | 4 | |
| 9.6 | | 3 |
| 11.3 | 5 | |
| 13.4 | | 4 |
| 13.8 | 6 | |
| 16.3 | 7 | |
| 17.2 | | 5 |
| 18.8 | 8 | |
| 21.0 | | 6 |

Table 1. (continued)

| The position of the centers of the cylindrical tubular parts of the radiation sources and the middle of the grooves. | | |
|---|---|---|
| **Position (cm)** | **Groove serial number** | **Transmitter serial number** |
| 21.3 | 9 | |
| 23.8 | 10 | |
| 24.8 | | 7 |
| 26.3 | 11 | |
| 28.6 | | 8 |
| 28.8 | 12 | |
| 31.3 | 13 | |
| 32.4 | | 9 |
| 33.8 | 14 | |
| 36.2 | | 10 |
| 36.3 | 15 | |
| 38.8 | 16 | |
| 40.0 | | 11 |
| 41.3 | 17 | |
| 43.8 | 18 | 12 |

### Measurements - Sensor prototype measurements

During a period, liquid is sprayed through a nozzle which is connected with the spray tank. During the measurements the data measured by the sensors is sent to a program on e.g. a portable computer. The data can be stored from every second to every 10 seconds. During measuring, decimal and heximal values are given on the screen. Besides these values a graph is shown.

### Measurements - Spray table measurements

At the same time when the sensors are measuring, the liquid is collected in the cylindrical collection tubes. The volume captured per collection tube is read manually by one person to minimize reading errors. As the volume can be read and the measuring period is known, the flow rate can be calculated.

### Nozzle types

Several different nozzles were used during testing:

- Flat fan nozzles:

    Teejet XR 11001-VS (orange)
    Teejet XR 11003 - VS (red)
    Teejet XR 11008-VS (white)

- Hollow cone nozzles:

    Albuz ATR 208 (lila)
    Albuz ATR 215 (orange)
    Albuz ATR 220 (red)
    Albuz ATR 230 (blue)

These nozzles have different orifices, resulting in different outputs. The liquid is sprayed in a lens shape, equally spread along the longest axis of the lens.

*Data generated by spray table and sensor prototype*

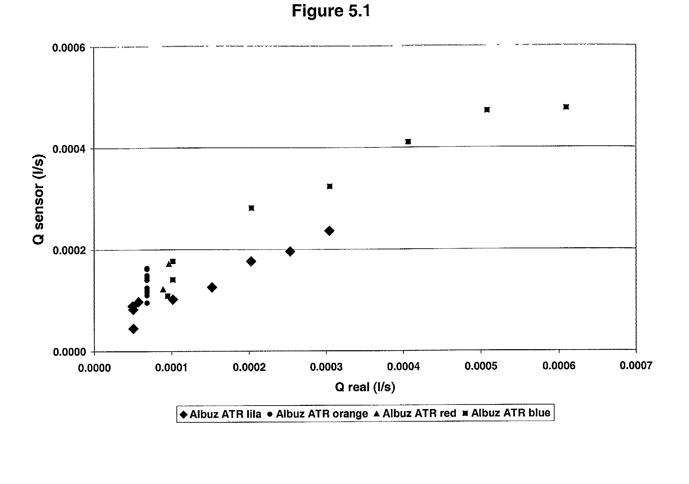

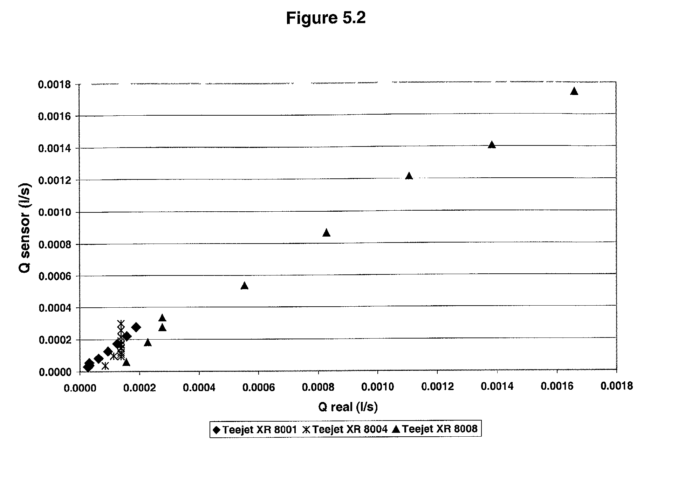

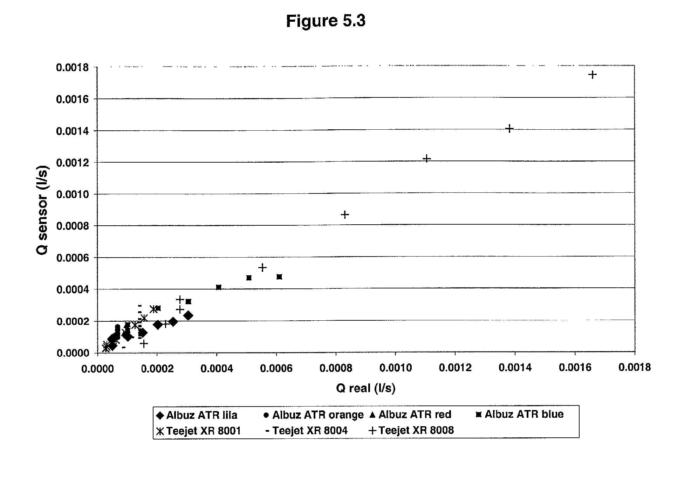

Figure 5 plots the measured discharge (l/s) versus the calculated discharge based on sensor information by integrating all extractable data (attenuation, droplet speed and droplet diameter). The measured discharge is based on a groove patternator. The sensor data are integrated using following type of expression:

$$Qs = f_0 A_{ir} * v_d^{f1} * SMD^{f2} \qquad (1)$$

With:

Qs : calculated discharge
$A_{ir}$: attenuation (dimensionless)
$v_d$: droplet speed (m/s)
SMDc: estimated surface median diameter ($\mu$m)
$f_0$: empirical calibration coefficient
$f_1$: empirical coefficient function of $v_d$
$f_2$: empirical shape coefficient.

The droplet diameters were always measured at low speeds. Shape deformation is a function of droplet size and droplet speed. It was used to adjust droplet size at higher speeds.
The boundary conditions of the measurements are shown in table 2:

Table 2:

| PARAMETER | MIN | MAX |
|---|---|---|
| Pressure (bar) | 1 | 10 |
| Droplet speed (m/s) | 1.1 | 13 |
| Discharge per measurement volume (ml/s)/dm$^3$: | 0.03 | 1.69 |
| Attenuation (dimensionless) | 21.6 | 1243.8 |

The concept method of the present invention is clearly a correct measurement tool for the identification of the sprayed medium.

**Claims**

1.  A method for identifying the size, shape and material properties a sprayed gaseous, liquid or solid medium using scattered radiation measurement, comprising:

    aiming at least two separate radiation sources simultaneously at a common volume of medium to be measured;
    operating at least two detectors simultaneous with the radiation sources, said detectors detecting scattered radiation from said radiation sources;
    positioning the radiation sources and the detectors in an alternated fashion; and
    correlating and evaluating said detected scattered radiation using signals from the detectors to identify the size, shape and material properties of the medium.

2.  A method according to claim 1, wherein each radiation from only one radiation source is evaluated with respect to each detector.

3.  A method according to claim 1 or 2, wherein the emitted radiation has a wavelength from 750-900nm, preferably around 850nm.

4. A method according to claim 1, 2 or 3, operating with at least two straight-lined arrays of alternated radiation sources and detectors.

5. Device for identifying the size, shape and material properties a sprayed gaseous, liquid or solid medium using scattered radiation measurement, comprising:

   scattered radiation measurement means, and
   a supporting frame able to support the scattered radiation measurement means,
   wherein said radiation measurement means consist of radiation sources and corresponding detectors being provided on the frame in a alternated fashion;
   and means for correlating and evaluating said detected scattered radiation using signals from the detectors to identify the size, shape and material properties of the medium.

6. Device according to claim 5, wherein said radiation measurement means consist of two arrays of alternated radiation sources and corresponding detectors.

7. Device according to claim 5, wherein said radiation measurement means consist of two pair arrays of alternated radiation sources and corresponding detectors.

8. Device according to claim 5, 6 or 7, wherein the frame consist of one and preferably two pair of parallel aligned supporting legs delimiting a measurement area.

9. Agricultural spraying system comprising the device according to any of the claims 5-8.

10. Scattered radiation measurement means comprising:

    a LED light source and a corresponding photodiode comprised in a housing, said housing is provided with optical labyrinths consisting essentially of a threaded cylindrical tubular parts provided in the pathway of the emitted radiation.

11. Scattered radiation measurement means according to claim 10, wherein an overpressure is maintained in said threaded cylindrical tubular part provided in the pathway of the emitted radiation.

12. Scattered radiation measurement means according to claim 10 or 11, wherein planar-convex lenses are provided in the radiation source as well as in the detector.

**FIG. 1**

FIG. 2A

FIG. 2B

FIG. 3A

FIG. 3B

FIG. 3C

FIG. 4

## Figure 5.1

# Figure 5.2

## Figure 5.3

## EUROPEAN SEARCH REPORT

Application Number

EP 02 44 7072

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 6 118 531 A (HERTEL MARTIN ET AL) 12 September 2000 (2000-09-12) | 1,5 | G01N21/53 |
| A | * column 4, line 3 - line 67; figure 1 * | 2 | G01N21/85 |
| | --- | | G01N15/02 |
| Y | US 4 677 426 A (DATTILO DONALD P) 30 June 1987 (1987-06-30) | 1,5 | G01N15/14 |
| A | * column 2, line 49 - column 3, line 25 * * column 7, line 47 - line 62; figures 1,2 * | 2-4,6-8 | |
| | --- | | |
| A | US 5 920 018 A (KIRBY JOSEPH SHELLIE ET AL) 6 July 1999 (1999-07-06) * column 4, line 19 - column 5, line 49; figures 2,3 * | 1-3,5 | |
| | --- | | |
| A | US 5 654 797 A (MOREAU CHRISTIAN ET AL) 5 August 1997 (1997-08-05) * column 3, line 8 - column 4, line 5 * | 1,5 | |
| | --- | | |
| A | WO 01 36937 A (STEIGLMEIER MANFRED ;DAMASCHKE NILS (DE); TROPEA CAMERON (DE); DAN) 25 May 2001 (2001-05-25) * page 13, line 23 - page 15, line 4 * | 1,5 | TECHNICAL FIELDS SEARCHED (Int.Cl.7) |
| | ----- | | G01N |

~~The present search report has been drawn up for all claims~~

| Place of search | Date of completion of the search | Examiner |
|---|---|---|
| MUNICH | 4 October 2002 | Stuebner, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent

Office

**Application Number**

EP 02 44 7072

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9

**European Patent Office**

**LACK OF UNITY OF INVENTION**
**SHEET B**

Application Number

EP 02 44 7072

The Search Division considers that the present European patent application does not comply with the requirements of unity of invention and relates to several inventions or groups of inventions, namely:

1. Claims: 1-9

   Method and apparatus with scattered radiation measurement means comprising at least two radiation sources and at least two detectors arranged in alternated fashion

2. Claims: 10-12

   Scattered radiation measurement means comprising a LED light source and a corresponding photodiode, a housing with optical labyrinths consisting essentially of a threaded cylindrical tubular part

Besides the "scattered radiation measurement means" and the use of at least one source and at least one detector no common feature and thus no single general inventive concept can be found.

EP 1 359 406 A1

**ANNEX TO THE EUROPEAN SEARCH REPORT
ON EUROPEAN PATENT APPLICATION NO.**   EP 02 44 7072

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2002

| Patent document cited in search report | | Publication date | Patent family member(s) | | Publication date |
|---|---|---|---|---|---|
| US 6118531 | A | 12-09-2000 | DE | 19718875 C | 29-10-1998 |
| | | | EP | 0878701 A | 18-11-1998 |
| US 4677426 | A | 30-06-1987 | NONE | | |
| US 5920018 | A | 06-07-1999 | AU | 732428 B | 26-04-2001 |
| | | | AU | 5798598 A | 03-07-1998 |
| | | | BR | 9713697 A | 09-05-2000 |
| | | | EP | 1015852 A | 05-07-2000 |
| | | | WO | 9826256 A | 18-06-1998 |
| US 5654797 | A | 05-08-1997 | CA | 2198159 A | 22-08-1997 |
| | | | DE | 19706890 A | 30-10-1997 |
| | | | FR | 2745381 A | 29-08-1997 |
| | | | GB | 2310492 A,B | 27-08-1997 |
| WO 0136937 | A | 25-05-2001 | DE | 19954702 A | 17-05-2001 |
| | | | AU | 1270001 A | 30-05-2001 |
| | | | EP | 1238258 A | 11-09-2002 |

EPO FORM P0459

For more details about this annex : see Official Journal of the European Patent Office, No. 12/82